(19) Europäisches Patentamt
European Patent Office
Office européen des brevets

(11) **EP 4 692 983 A1**

(12) **EUROPEAN PATENT APPLICATION**
published in accordance with Art. 153(4) EPC

(43) Date of publication:
**11.02.2026 Bulletin 2026/07**

(21) Application number: **24858028.4**

(22) Date of filing: **01.07.2024**

(51) International Patent Classification (IPC):
**G06F 1/08** (2006.01)

(52) Cooperative Patent Classification (CPC):
**G06F 1/08; G06F 9/50**

(86) International application number:
**PCT/CN2024/102908**

(87) International publication number:
**WO 2025/044484 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.08.2023 CN 202311103322
08.09.2023 CN 202311168887**

(71) Applicant: **Huawei Technologies Co., Ltd.
Shenzhen, Guangdong 518129 (CN)**

(72) Inventors:
- **ZOU, Jie
  Shenzhen, Guangdong 518129 (CN)**
- **XU, Kuan
  Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **FREQUENCY MODULATION METHOD FOR ELECTRONIC DEVICE AND ELECTRONIC DEVICE**

(57) This application provides a frequency scaling method for an electronic device and the electronic device, and relates to the terminal field. The method includes: obtaining a first computing power difference and a first frequency value that are of a processor in a first frequency scaling period, where the first computing power difference is positively correlated with a difference between a load duty cycle of the processor in the first frequency scaling period and a target load duty cycle; determining a second frequency value of the processor in a second frequency scaling period based on the first computing power difference and the first frequency value, where the second frequency scaling period is after the first frequency scaling period; and adjusting a frequency value of the processor based on the second frequency value in the second frequency scaling period. The technical solutions provided in this application can improve flexibility and accuracy of frequency scaling, implement on-demand supply of the frequency value of the processor and a high response speed, and resolve problems of oversupply and undersupply of the frequency value.

```
┌─────────────────────────────────────────────────────────┐
│ Obtain a first computing power difference and a first    │
│ frequency value that are of a processor in a first       │
│ frequency scheduling period, where the first             │      ⌐ S501
│ computing power difference is positively correlated      │
│ with a difference between a load duty cycle of the       │
│ processor in the first frequency scheduling period and   │
│ a target load duty cycle                                 │
└─────────────────────────────────────────────────────────┘
                            │
                            ▼
┌─────────────────────────────────────────────────────────┐
│ Determine a second frequency value of the processor in   │
│ a second frequency scheduling period based on a          │      ⌐ S502
│ closed-loop feedback loop algorithm, the first           │
│ computing power difference, and the first frequency      │
│ value, where the second frequency scheduling period is   │
│ after the first frequency scheduling period              │
└─────────────────────────────────────────────────────────┘
                            │
                            ▼
┌─────────────────────────────────────────────────────────┐
│ Adjust a frequency value of the processor based on the   │      ⌐ S503
│ second frequency value in the second frequency           │
│ scheduling period                                        │
└─────────────────────────────────────────────────────────┘
```

FIG. 5

## Description

This application claims priorities to Chinese Patent Application No. 202311103322.4, filed with the China National Intellectual Property Administration on August 29, 2023 and entitled "FREQUENCY SCALING METHOD FOR PROCESSOR AND ELECTRONIC DEVICE", and to Chinese Patent Application No. 202311168887.0, filed with the China National Intellectual Property Administration on September 8, 2023 and entitled "FREQUENCY SCALING METHOD FOR ELECTRONIC DEVICE AND ELECTRONIC DEVICE", both of which are incorporated herein by reference in their entireties.

## TECHNICAL FIELD

This application relates to the terminal field, and in particular, to a frequency scaling method for an electronic device and the electronic device.

## BACKGROUND

Frequency scaling for a processor is a technology in which a frequency value of the processor is properly configured based on load of the processor. An objective of the frequency scaling is to enable performance of the processor to meet a requirement of current load, and avoid unnecessary power consumption waste.

In the conventional technology, one or more frequency increase scenarios may be preset, for example, an application cold startup, a sliding operation, and a tap to swap operation. When the electronic device runs, a current service scenario may be identified. When the service scenario is the preset frequency increase scenario, the frequency value of the processor is increased to a fixed frequency value and the fixed frequency value is maintained for fixed duration. However, under such a frequency scaling policy, the frequency value of the processor is increased to the fixed frequency value and the fixed frequency value is maintained for the fixed duration, and the fixed frequency value and the fixed duration do not completely match the current service scenario. Therefore, the frequency value may be excessively large, and frequency increase time may be excessively long, resulting in problems such as an excessive computing power of the processor, power consumption waste, and heating. Alternatively, the frequency value may be excessively low, or the frequency increase time may be excessively short, and consequently a requirement of the current service scenario cannot be met. For example, duration of the service scenario exceeds the frequency increase duration, and consequently frame freezing and unresponsiveness occur, leading to a poor performance experience.

## SUMMARY

In view of this, this application provides a frequency scaling method for an electronic device and the electronic device, to improve flexibility and accuracy of frequency scaling, implement on-demand supply of a frequency value of a processor and a high response speed, and resolve problems of oversupply and undersupply of the frequency value.

To achieve the foregoing objective, according to a first aspect, an embodiment of this application provides a frequency scaling method for an electronic device, including:

obtaining a first computing power difference and a first frequency value that are of a processor in a first frequency scaling period, where the first computing power difference is positively correlated with a difference between a load duty cycle of the processor in the first frequency scaling period and a target load duty cycle; determining a second frequency value of the processor in a second frequency scaling period based on the first computing power difference and the first frequency value, where the second frequency scaling period is after the first frequency scaling period; and adjusting a frequency value of the processor based on the second frequency value in the second frequency scaling period.

In this embodiment of this application, the first computing power difference and the first frequency value of the processor in the first frequency scaling period may be obtained. Because the first computing power difference is positively correlated with the difference between the load duty cycle of the processor in the first frequency scaling period and the target load duty cycle, and the load duty cycle may be used as a load measurement value of the processor in the first frequency scaling period, the first computing power difference may indicate a difference between an actual computing power provided by the processor in the first frequency scaling period and a target computing power. The second frequency value of the processor in the second frequency scaling period is determined based on the first computing power difference and the first frequency value of the processor in the first frequency scaling period, and the frequency value of the processor is adjusted based on the second frequency value in the second frequency scaling period, to improve flexibility and accuracy of frequency scaling, implement on-demand supply of the frequency value of the processor and a high response speed. This resolves problems of oversupply and undersupply of the frequency value, eliminates the need to preset a frequency increase scenario, and offers good generalizability.

In some implementations, the electronic device includes a single-core processor chip, and one processor core (core) is encapsulated in the single-core processor chip. The processor may be the single-core processor chip or the processor core in the single-core processor chip. In some implementations, the electronic device includes a multi-core processor chip, and a plurality of processor cores are encapsulated in the multi-core processor chip. The processor may be any processor core in the multi-core processor chip.

In some implementations, obtaining the first computing power difference of the processor in the first frequency scaling period includes: obtaining a quantity of clock cycles consumed by the processor to execute an instruction in the first frequency scaling period; determining the load duty cycle of the processor in the first frequency scaling period based on the quantity of clock cycles; and determining the first computing power difference based on the load duty cycle and the target load duty cycle.

In some implementations, obtaining the quantity of clock cycles consumed by the processor to execute the instruction in the first frequency scaling period includes: obtaining, via a performance monitor unit (performance monitor unit, PMU) or a register, the quantity of clock cycles consumed by the processor to execute the instruction in the first frequency scaling period.

In some implementations, the PMU may implement performance data counting via the register.

A clock cycle is also referred to as a clock_cycle or a beat. The clock cycle is a reciprocal of a clock frequency. The frequency value of the processor can determine a maximum quantity of clock cycles that can be generated by the processor in a same period of time. In addition, in a same period of time, a larger frequency value of the processor indicates a larger maximum quantity of clock cycles that can be generated by the processor. In other words, the processor can complete more instructions at same efficiency.

A quantity of clock cycles consumed by the processor in each frequency scaling period is obtained by using hardware, for example, the PMU or the PMU register, so that load of the processor in each frequency scaling period can be more accurately determined.

In some implementations, the frequency scaling period may be divided by time base (tick). The time base is a relative time unit in an operating system, and is derived from a periodic interrupt (output pulse) of a timer. One interrupt indicates one tick. A time base may be set to duration of one frequency scaling period. In each frequency scaling period, the register of the processor continuously collects the quantity of clock cycles consumed by the processor, and determines whether the time base is reached. If the time base is not reached, the register continues to collect the quantity of clock cycles consumed by the processor. If the time base is reached, the processor continues to perform subsequent steps.

In some implementations, determining the second frequency value of the processor in the second frequency scaling period based on the first computing power difference and the first frequency value includes: determining the second frequency value of the processor in the second frequency scaling period based on at least one of the first computing power difference, the first frequency value, and a sum of a second computing power difference and a computing power difference of the processor in at least one historical frequency scaling period, where the second computing power difference is a computing power difference of the processor in a third frequency scaling period, and the third frequency scaling period is before the first frequency scaling period.

In some implementations, the at least one historical frequency scaling period may include the first frequency scaling period and the third frequency scaling period.

In some implementations, the method further includes: if the second frequency value of the processor in the second frequency scaling period is not determined based on at least one of the first computing power difference, the first frequency value, and the sum of the second computing power difference and the computing power difference of the processor in the at least one historical frequency scaling period within first duration from a moment at which the first frequency scaling period ends, deleting the first computing power difference, the first frequency value, and the sum of the second computing power difference and the computing power difference of the processor in the at least one historical frequency scaling period.

In some implementations, the first duration is an integer multiple of a frequency scaling period. For example, the frequency scaling period is 4 ms, and the first duration may be five times the frequency scaling period, that is, 20 ms.

When the second frequency value of the processor in the second frequency scaling period is not determined within the first duration from the moment at which the first frequency scaling period ends, it indicates that second duration since the first frequency scaling period ends is greater than or equal to preset first duration. In other words, the duration from the first frequency scaling period to the current moment is long, and load, a service scenario, and the like of the electronic device may have changed greatly. Therefore, it is difficult to accurately determine the frequency value of the processor in a frequency scaling period after the current moment based on data, for example, a quantity of clock cycles and computing power in the historical frequency scaling period including the first frequency scaling period. Therefore, the first computing power difference, the first frequency value, and the sum of the second computing power difference and the computing power difference of the processor in the at least one historical frequency scaling period may be deleted. Alternatively, it may be understood as initializing the first computing power difference, the first frequency value, and the sum of the second computing power difference and the computing power difference of the processor in the at least one historical frequency scaling period.

In some implementations, determining the second frequency value of the processor in the second frequency scaling period based on the first computing power difference and the first frequency value includes: determining the second frequency value of the processor in the second frequency scaling period based on a closed-loop feedback loop algorithm, the first computing power difference, and the first frequency value, where the closed-loop feedback loop algorithm includes proportional control and at least one of integral control and derivative control.

In some implementations, the first computing power difference of the processor in the first frequency scaling period may implement proportional control on the frequency value. When the first computing power difference is larger, a proportional control effect is larger, and a difference between the second frequency value and the first frequency value is also larger, so that actual computing power of the processor matches the load more quickly. When the first computing power difference is smaller, a proportional control effect is smaller, and a difference between the second frequency value and the first frequency value is also smaller, to avoid over-scaling.

In some implementations, the sum of the computing power differences of the processor in the at least one historical frequency scaling period before the second frequency scaling period may implement integral control on the frequency value. When the sum of the computing power differences is larger, an integral control effect is larger, to reduce a static error. When the sum of the computing power differences is smaller, an integral control effect is smaller, to avoid integral saturation.

In some implementations, a difference between the first computing power difference of the processor in the first frequency scaling period and the second computing power difference of the processor in the third frequency scaling period may reflect a change rate of the computing power difference. The third frequency scaling period may be before the first frequency scaling period. When the change rate is higher, a derivative control effect is higher, and a difference between the first frequency value and the second frequency value is also larger, so that the actual computing power of the processor matches the load more quickly. When the change rate is lower, the derivative control effect is lower, and the difference between the first frequency value and the second frequency value is also lower, to avoid over-scaling.

In some implementations, the third frequency scaling period may be a frequency scaling period before the first frequency scaling period, the second frequency scaling period may be a frequency scaling period after the first frequency scaling period, and both a time interval between the third frequency scaling period and the first frequency scaling period and a time interval between the first frequency scaling period and the second frequency scaling period are less than five times of the frequency scaling period. For example, the frequency scaling period is 4 ms, and both the time interval between the third frequency scaling period and the first frequency scaling period and the time interval between the first frequency scaling period and the second frequency scaling period are less than 20 ms.

In some implementations, adjusting the frequency value of the processor based on the second frequency value in the second frequency scaling period includes: setting the frequency value of the processor to the second frequency value in the second frequency scaling period.

In some implementations, the second frequency value may be used as a frequency reference value, and the electronic device may determine, based on a preset decision manner, whether to set the frequency value of the processor to the second frequency value in the second frequency scaling period.

According to a second aspect, an embodiment of this application provides a frequency scaling method for an electronic device. The frequency scaling method for the electronic device includes: identifying a service scenario of the electronic device; obtaining a first computing power difference and a first frequency value that are of a processor in a first frequency scaling period in response to the service scenario being a specific scenario, where the first computing power difference is positively correlated with a difference between a load duty cycle of the processor in the first frequency scaling period and a target load duty cycle; determining a second frequency value of the processor in a second frequency scaling period based on the first computing power difference and the first frequency value, where the second frequency scaling period is after the first frequency scaling period; and adjusting a frequency value of the processor based on the second frequency value in the second frequency scaling period.

In this embodiment of this application, when the service scenario of the electronic device is identified and the electronic device is in the specific scenario, on-demand supply of the frequency value of the processor and a high response speed can be implemented, and problems of oversupply and undersupply of the frequency value are resolved.

In some implementations, the specific scenario includes any one of the following: starting an application, opening a status bar, switching a display interface, responding to an input operation, displaying an animation effect, and displaying a virtual keyboard.

Starting an application may include cold starting an application or hot starting an application. When an application is started, there is no process of the application in the background of the electronic device. In this case, the electronic device re-creates a new process and allocates the new process to the application. When an application is hot started, there is a process of the application in the background. Therefore, when there is the existing process, the application may be started from the existing process.

The status bar may be used to display a running status of the electronic device, for example, a network mode, a message prompt mode, brightness, and a volume. A user may open the status bar to query or configure the running status of the electronic device.

Switching a display interface may include switching between any plurality of display interfaces of the electronic device. In some implementations, switching a display interface may include switching between display interfaces in an application, or may include switching between display interfaces of applications.

An input operation may be used by the user or another external object to input data to the electronic device. In some implementations, the input operation may include a tap operation or a touch operation on the display.

Displaying an animation effect may be used to provide more realistic and lively visual experience for the user. In some implementations, a corresponding animation effect may be displayed in response to the user operation, for example, a dynamic switching effect during display interface switching.

The virtual keyboard may be used to receive data, for example, a text entered by the user.

According to a third aspect, an embodiment of this application provides a frequency scaling apparatus for an electronic device. The apparatus has a function of implementing behavior of the electronic device according to the foregoing aspects and the possible implementations of the foregoing aspects. The function may be implemented by hardware, or may be implemented by hardware executing corresponding software. The hardware or the software includes one or more modules or units corresponding to the foregoing function, for example, a transceiver module or unit, a processing module or unit, or an obtaining module or unit.

According to a fourth aspect, an embodiment of this application provides an electronic device, including a memory and a processor. The memory is configured to store a computer program. The processor is configured to perform the method according to any one of the first aspect when invoking the computer program.

According to a fifth aspect, an embodiment of this application provides a chip system. The chip system includes a processor. The processor is coupled to a memory, and the processor executes a computer program stored in the memory, to implement the method according to any one of the first aspect.

The chip system may be a single chip or a chip module including a plurality of chips.

According to a sixth aspect, an embodiment of this application provides a computer-readable storage medium. The computer-readable storage medium stores a computer program. When the computer program is executed by a processor, the method according to any one of the first aspect is implemented.

According to a seventh aspect, an embodiment of this application provides a computer program product. When the computer program product runs on an electronic device, the electronic device is enabled to perform the method according to any one of the first aspect or the possible implementations of the first aspect.

It may be understood that, for beneficial effects of the third aspect to the seventh aspect, reference may be made to related descriptions in the first aspect or the second aspect. Details are not described herein again.

## BRIEF DESCRIPTION OF DRAWINGS

FIG. 1 is a diagram of a structure of an electronic device according to an embodiment of this application;
FIG. 2 is a diagram of a load following curve according to an embodiment of this application;
FIG. 3 is a schematic flowchart of a frequency scaling method for an electronic device according to an embodiment of this application;
FIG. 4A and FIG. 4B are a schematic flowchart of another frequency scaling method for an electronic device according to an embodiment of this application;
FIG. 5 is a schematic flowchart of another frequency scaling method for an electronic device according to an embodiment of this application;
FIG. 6 is a schematic flowchart of another frequency scaling method for an electronic device according to an embodiment of this application; and
FIG. 7 is a diagram of another load following curve according to an embodiment of this application.

## DESCRIPTION OF EMBODIMENTS

A frequency scaling method for a processor that is provided in embodiments of this application may be applied to an electronic device, for example, a mobile phone, a tablet, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

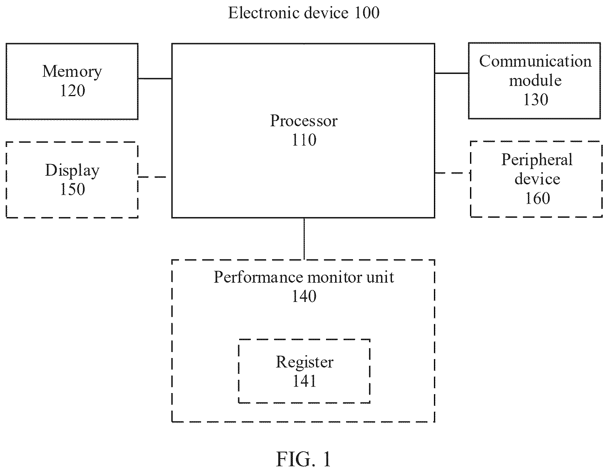

FIG. 1 is a diagram of a structure of an electronic device 100 according to an embodiment of this application. The electronic device 100 may include a processor 110, a memory 120, a communication module 130, and the like.

The memory 120 is configured to store program code and data. In this embodiment of this application, the processor 110 may execute computer-executable instructions stored in the memory 120, and is configured to: control and manage an action of the electronic device 100. A frequency value (also referred to as a frequency) of the processor 110 is a quantity of clock cycles obtained when the processor 110 runs in one second. The processor 110 may run one operation in each clock cycle. Therefore, a larger frequency value of the processor 110 indicates a higher operation speed and better performance of the processor 110, but higher power consumption. In some implementations, the electronic device 100 may include one or more processors 110. In some implementations, the electronic device 100 may include one or more frequency scaling policies. The electronic device 100 may adjust a frequency value of one or more processors 110 based on the frequency scaling policies, to balance power consumption and performance of the electronic device 100. In some implementations, the electronic device 100 includes a single-core processor chip, and one processor core (core) is encapsulated in the single-core processor chip. The processor 110 may be the single-core processor chip or the processor core in the single-core processor chip. In some implementations, the electronic device 100 includes a multi-core processor chip, a plurality of processor cores are encapsulated in the multi-core processor chip, and the processor 110 may be any processor core in the multi-core processor chip.

The communication module 130 may be configured to implement communication between internal modules of the electronic device 100, communication between the electronic device 100 and another external electronic device, or the like. For example, if the electronic device 100 communicates with another electronic device through a wired connection, the communication module 130 may include an interface, for example, a USB interface, where the USB interface may be an interface that complies with a USB standard specification, and may be specifically a mini USB interface, a micro USB interface, a USB Type C interface, or the like. The USB interface may be configured to connect to a charger for charging the electronic device 100, may be configured to transmit data between the electronic device 100 and a peripheral device, or may be configured to connect to a headset for playing an audio via the headset. The interface may be further configured to connect to another electronic device, for example, an AR device.

Alternatively, the communication module 130 may include an audio component, a radio frequency circuit, a Bluetooth chip, a wireless fidelity (wireless fidelity, Wi-Fi) chip, a near-field communication (near-field communication, NFC) module, and the like, to implement interaction between the electronic device 100 and the another electronic device in a plurality of different manners.

Optionally, the electronic device 100 may further include a performance monitor unit 140. The performance monitor unit may directly collect a corresponding event from various types of hardware, for example, a processor, or may be associated with software to optimize hardware or an operating system. The performance monitor unit 140 may include a register 141, and the register 141 may be configured to record an original hardware event. In some implementations, the register 141 may record a quantity of clock cycles consumed by the processor 110. In some implementations, the performance monitor unit 140 may further include a counter. When detecting an original hardware event, the register 141 may specifically count a quantity of original detection events via the counter. In some implementations, the register 141 may also be referred to as a PMU register.

Optionally, the electronic device 100 may further include a display 150, and the display 150 may display an image, a video, or the like in a human-computer interaction interface.

Optionally, the electronic device 100 may further include a peripheral device 160, for example, a mouse, a keyboard, a speaker, or a microphone.

It should be understood that, in addition to various components or modules enumerated in FIG. 1, the structure of the electronic device 100 is not specifically limited in embodiments of this application. In some other embodiments of this application, the electronic device 100 may include more or fewer components than those shown in the figure, or combine some components, or split some components, or have different component arrangements. The components shown in the figure may be implemented by hardware, software, or a combination of software and hardware.

To facilitate understanding of the technical solutions in embodiments of this application, the following first describes an application scenario of embodiments of this application.

A frequency value of a processor may also be referred to as a frequency, is a clock frequency of the processor, and may be understood as an operating frequency of the processor during an operation. A larger frequency value indicates a higher computing speed of the processor.

A clock cycle is also referred to as a clock_cycle or a beat. The clock cycle is a reciprocal of a clock frequency. The clock cycle is a basic time unit in an electronic device. In one clock cycle, the electronic device may complete only one "micro-operation" or several compatible (non-conflicting and non-interfering on a data path) "micro-operations". A set of "micro-operations" may form an instruction. The frequency value of the processor can determine a maximum quantity of clock cycles that can be generated by the processor in a same period of time. In addition, in a same period of time, a larger frequency value of the processor indicates a larger maximum quantity of clock cycles that can be generated by the processor. In other words, the processor can complete more instructions at same efficiency. However, it may be understood that a quantity of clock cycles actually consumed by the processor to execute an instruction in a same period of time may be positively correlated with load of the processor, and the actually consumed quantity of clock cycles is less than a maximum quantity of clock cycles that can be generated. For example, if the frequency value of the processor is 2 GHz, a maximum quantity of 2,000,000 clock cycles can be generated in 1 ms, but the quantity of clock cycles actually consumed by the processor to execute an instruction in 1 ms may be less than 2,000,000.

Frequency scaling for a processor is a technology in which a frequency value of the processor is properly configured based on load of the processor. An objective of the frequency scaling is to enable performance of the processor to meet a requirement of current load, and avoid unnecessary power consumption waste.

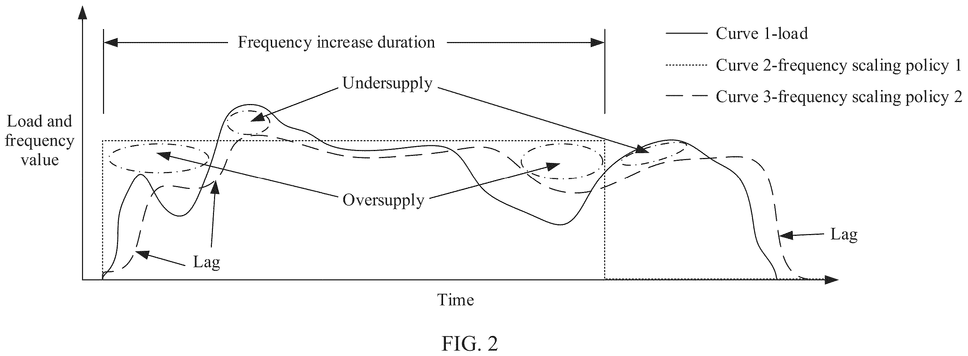

The following describes several example frequency increase policies with reference to a diagram of a load following curve of the processor shown in FIG. 2. In FIG. 2, a curve 1 is a load curve of the processor, a curve 2 is a frequency value curve corresponding to a frequency scaling policy 1, and a curve 3 is a frequency value curve corresponding to a frequency scaling policy 2.

In some frequency scaling policies (namely, the frequency scaling policy 1), one or more frequency increase scenarios (for example, a boost scenario) may be preset, for example, an application cold startup, a sliding operation, and a tap to swap operation. When the electronic device runs, a current service scenario may be identified. When the service scenario is the preset frequency increase scenario, the frequency value of the processor is increased to a fixed frequency value and the fixed frequency value is maintained for fixed duration. However, under such a frequency scaling policy, the frequency value of the processor is increased to the fixed frequency value and the fixed frequency value is maintained for the fixed duration, and the fixed frequency value and the fixed duration do not completely match the current service scenario. Therefore, the frequency value may be excessively large, and frequency increase time may be excessively long (that is, oversupply), resulting in problems such as an excessive computing power of the processor, power consumption waste, and heating. Alternatively, the frequency value may be excessively low, or the frequency increase time may be excessively short, and consequently a requirement of the current service scenario cannot be met (that is, undersupply). For example, duration of the service scenario exceeds the frequency increase duration, and consequently frame freezing and unresponsiveness occur, leading to a poor performance experience. In addition, when the frequency scaling policy is used for a long time, the electronic device may be severely heated, resulting in more serious problems such as frequency reduction, a decrease in a resolution of a display, a decrease in a refresh rate, a decrease in brightness, and loosening of a bonded structure between components. This further adversely affects user experience.

In some frequency scaling policies (namely, the frequency scaling policy 2), the load of the processor may be determined according to a window assist load tracking (window assist load tracking, WALT) algorithm. When the load of the processor reaches a preset value, the frequency value of the processor is increased. The WALT may be used to predict, based on load of N windows in a history of the processor, load of the processor in a next window in a form of time length window, and output a frequency value. Currently, a default window used in an open source community is 20 ms (millisecond). However, a response speed of this frequency scaling policy is very low. For burst high load, a frequency of the processor cannot be increased in time, and consequently a computing power of the processor is insufficient, leading to a poor performance experience. In addition, after the load decreases, the frequency of the processor cannot be decreased in time, leading to wasted power consumption.

To resolve at least some of the foregoing technical problems, this application provides a frequency scaling method for an electronic device. A frequency scaling policy used in the frequency scaling method may be referred to as a frequency scaling policy 3. In the frequency scaling policy 3, a frequency value of a processor may be determined according to a closed-loop feedback loop algorithm, for example, pid (proportional-integral-derivative superimposed composite control), pi (proportional-integral control), or pd (proportional-derivative control), to improve flexibility and accuracy of frequency scaling, implement on-demand supply of the frequency value of the processor and a high response speed. This resolves problems of oversupply and undersupply of the frequency value, eliminates the need to identify the frequency increase scenario in advance to set a corresponding frequency scaling policy, and offers good generalizability. In the frequency scaling policy 3, the load of the processor may be determined through obtaining, via a PMU, a quantity of clock cycles consumed by the processor to execute an instruction, to improve computing accuracy of the load of the processor, and further improve accuracy of frequency scaling performed on the processor. Specific embodiments are used below to describe in detail the technical solutions of this application. The following several specific embodiments may be combined with each other, and a same or similar concept or process may not be described repeatedly in some embodiments.

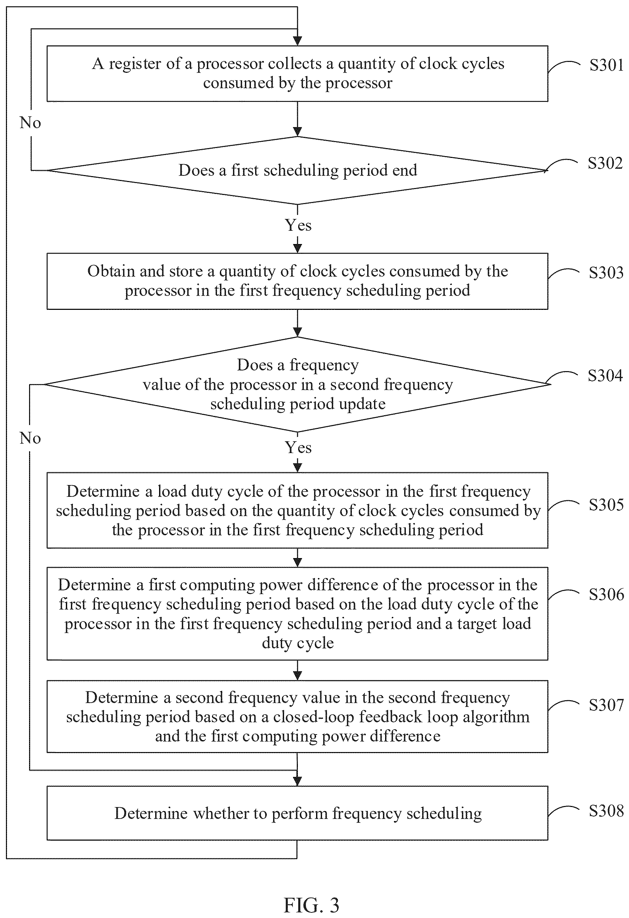

FIG. 3 is a flowchart of a frequency scaling method for an electronic device according to an embodiment of this application. The method may be used by the electronic device to perform frequency scaling on a processor in a single frequency scaling period. It should be noted that the method is not limited to a specific sequence described in FIG. 3 and the following descriptions. It should be understood that, in other embodiments, sequences of some steps in the method may be interchanged based on an actual requirement, or some steps in the method may be omitted or deleted. The method includes the following steps.

S301: A register of a processor collects a quantity of clock cycles consumed by the processor.

The processor is any processor in an electronic device.

In a running process, the processor may execute one or more instructions, and each instruction may be decomposed into a plurality of "micro-operations." The processor consumes one clock cycle each time the processor executes one "micro-operation." It may be understood that larger load of the processor indicates more instructions executed by the processor, and correspondingly, a larger quantity of consumed clock cycles.

In some implementations, the register of the processor may be a storage area used by the processor to store data, and may be configured to temporarily store data participating in an operation, an operation result, and some information required for running of the processor. In some implementations, the register may be a PMU register. The quantity of clock cycles consumed by the processor is collected via the register. In other words, the load of the processor may be evaluated via hardware information.

S302: The electronic device determines whether a first frequency scaling period ends. If the first frequency scaling period ends, S303 is performed. If the first frequency scaling period does not end, S301 is performed.

If the first frequency scaling period does not end, S301 may be performed again, that is, the quantity of clock cycles consumed by the processor continues to be collected. If the first frequency scaling period ends, it indicates that the quantity of clock cycles consumed by the processor in the first frequency scaling period has been counted, and a subsequent step may continue to be performed.

In some implementations, duration of a frequency scaling period may be obtained through presetting. For example, one frequency scaling period may be 4 ms. Certainly, in actual application, the duration of the frequency scaling period may alternatively be another value. A manner of setting the frequency scaling period and specific duration of the frequency scaling period are not limited in this embodiment of this application.

In some implementations, the frequency scaling period may be divided through a time base (tick). The time base is a relative time unit in an operating system, and is derived from a periodic interrupt (output pulse) of a timer. One interrupt indicates one tick, and is also referred to as a "clock tick" or a time scale. A time base may be set to duration of one frequency scaling period. In each frequency scaling period, the register of the processor continuously collects the quantity of clock cycles consumed by the processor, and determines whether the time base is reached. If the time base is not reached, the register continues to collect the quantity of clock cycles consumed by the processor. If the time base is reached, the processor continues to perform subsequent steps.

S303: The electronic device obtains and stores the quantity of clock cycles consumed by the processor in the first frequency scaling period.

In some implementations, the electronic device may obtain, via a PMU or the PMU register, the quantity of clock cycles consumed by the processor in the first frequency scaling period.

In S301 to S303, the quantity of clock cycles consumed by the processor in each frequency scaling period is obtained by using hardware, so that the load of the processor in each frequency scaling period can be more accurately determined. In addition, it may be understood that, in actual application, the quantity of clock cycles consumed by the processor in each frequency scaling period may be obtained in another manner, or the load of the processor in each frequency scaling period may be determined in another manner.

S304: The electronic device determines whether to update a frequency value of the processor in a second frequency scaling period. If the frequency value of the processor in the second frequency scaling period is updated, S305 may be performed. If the frequency value of the processor in the second frequency scaling period is not updated, S308 may be performed.

In some examples, the second frequency scaling period may be after the first frequency scaling period. In some implementations, the second frequency scaling period may be a next frequency scaling period of the first frequency scaling period.

Adjusting the frequency value of the processor affects performance and power consumption of the processor. For example, when the frequency value is increased, the processor has high performance, but also causes higher power consumption. Therefore, when entering each frequency scaling period, the electronic device may determine, based on a preset power consumption policy, whether to update the frequency value of the processor in the frequency scaling period. For example, when the electronic device is in an energy saving mode, or a current remaining battery level of the electronic device is low, frequency scaling may not be performed on the processor, so as to improve a battery life of the electronic device.

It may be understood that, in actual application, the electronic device may alternatively determine, for another reason and in another manner, whether to update the frequency value of the processor in the next frequency scaling period. A reason for determining whether to update the frequency value of the processor in the next frequency scaling period and a specific determining manner are not limited in embodiments of this application.

In some implementations, S304 may be omitted or skipped. In other words, the electronic device may always update, in each frequency scaling period, the frequency value of the processor in the frequency scaling period.

S305: The electronic device determines a load duty cycle of the processor in the first frequency scaling period based on the quantity of clock cycles consumed by the processor in the first frequency scaling period.

In some examples, the load duty cycle of the processor may indicate a busyness degree of the processor in a period of time, or the load duty cycle may be used as a load measurement value of the processor in the period of time. The load duty cycle may be represented by a percentage.

A greater load duty cycle of the processor in the first frequency scaling period may indicate busier processor in the first frequency scaling period, namely, higher load. It can be learned from the foregoing that the quantity of clock cycles consumed by the processor in the first frequency scaling period is obtained by using hardware, so that the load of the processor in the first frequency scaling period can be more accurately determined. Therefore, the load duty cycle of the processor in the first frequency scaling period can be more accurately determined based on the quantity of clock cycles consumed by the processor in the first frequency scaling period.

In some implementations, the load duty cycle of the processor in the first frequency scaling period may be determined according to the following formula 1:

$$cpu\_usage = clock\_cycles * 1024 / avg\_freq \quad \text{(formula 1)}$$

In some examples, cpu_usage represents the load duty cycle of the processor in the first frequency scaling period, clock_cycles represents the quantity of clock cycles consumed by the processor in the first frequency scaling period, and avg_freq represents an average frequency value of the processor in the first frequency scaling period. Because the electronic device may further adjust the frequency value of the processor based on another reason (for example, another frequency scaling policy) during running of the processor, avg_freq may be different from a first frequency value of the processor in the first frequency scaling period.

It may be understood that the load duty cycle of the processor in the first frequency scaling period may alternatively be determined in another manner.

S306: The electronic device determines a first computing power difference of the processor in the first frequency scaling period based on the load duty cycle of the processor in the first frequency scaling period and a target load duty cycle.

In some implementations, the target load duty cycle may be obtained through presetting. For example, the target load duty cycle may be 75%, that is, target_load is 1024 * 75%. It may be understood that in actual application, the target load duty cycle may alternatively be set in another manner, and the target load duty cycle may alternatively be another value. A manner of setting the target load duty cycle and a specific value of the target load duty cycle are not limited in embodiments of this application.

In some implementations, the first computing power difference of the processor in the first frequency scaling period may be determined according to the following formula 2:

$$error = compu * cpu\_usage / targetload - compu \quad \text{(formula 2)}$$

In some examples, error represents the first computing power difference; compu represents an actual computing power of the processor in the first frequency scaling period, and compu may be determined based on the first frequency value of the processor in the first frequency scaling period; and compu * cpu_usage/target_load may represent a target computing power. It can be learned from the formula 2 that the first computing power difference is positively correlated with a difference between the load duty cycle of the processor in the first frequency scaling period and the target load duty cycle.

In some implementations, a load duty cycle difference between the load duty cycle of the processor in the first frequency scaling period and the target load duty cycle may be determined, and the first computing power difference is determined based on the load duty cycle difference from a stored mapping relationship between a load duty cycle difference and a computing power difference.

In some implementations, the electronic device may obtain the mapping relationship between the load duty cycle difference and the computing power difference, and store the mapping relationship. The mapping relationship may be represented in a form of a table. For example, the mapping relationship may include a plurality of load duty cycle differences and computing power differences corresponding to the load duty cycle differences. In some implementations, the mapping relationship may be represented in a function, for example, a computing power difference=A x (a load duty cycle difference), where A may be a parameter determined in advance. It may be understood that, in actual application, the electronic device may alternatively obtain the mapping relationship between the load duty cycle difference and the computing power difference in another manner, and the mapping relationship between the load duty cycle difference and the computing power difference may alternatively be represented in another manner.

It may be understood that, in actual application, the first computing power difference of the processor in the first frequency scaling period may alternatively be determined in another manner.

It can be learned from the foregoing that the load duty cycle of the processor may indicate a busyness degree of the processor in a period of time, and the first computing power difference is positively correlated with the difference between the load duty cycle of the processor in the first frequency scaling period and the target load duty cycle. When the load duty cycle of the processor in the first frequency scaling period is greater than the target load duty cycle, the first computing power difference is greater than 0, and it may indicate that an actual computing power of the processor in the first frequency scaling period is insufficient, and cannot meet a load requirement. When the load duty cycle of the processor in the first frequency scaling period is less than the target load duty cycle, the first computing power difference is less than 0, and it may indicate that the actual computing power of the processor in the first frequency scaling period overflows, and can meet a load requirement, and the overflowed computing power may waste some power consumption.

S307: The electronic device determines a second frequency value in the second frequency scaling period based on the closed-loop feedback loop algorithm and the first computing power difference.

The closed-loop feedback loop algorithm may include three parts: proportional control (p), integral control (i), and derivative control (d). The three parts may be used separately or in combination. The proportional control part may generate a control effect by adjusting an error between a system input and a specified value. The integral control part may generate a control effect based on an accumulated error between the system output and the specified value. The derivative control part may generate a control effect based on a change rate of a system output. The three parts: proportional control, integral control, and derivative control may be combined to implement precise control on the system. Closed-loop control is a control method in which the system output is used as a feedback signal, and the system output is adjusted after being compared with the specified value. The system output may be continuously fed back, so that a deviation can be corrected in time, and the system can better adapt to a change. In some implementations, the closed-loop feedback loop algorithm may include proportional control (p), and may further include at least one of proportional-integral control (i) and proportional-derivative control (d). In some implementations, the closed-loop feedback loop algorithm may include proportional-integral-derivative composite control (pid), proportional-integral control (pi), or proportional-derivative control (pd). In some implementations, the proportional-integral-derivative composite control may be specifically positional proportional-integral-derivative composite control.

In some implementations, closed-loop feedback loop control may be performed on the frequency value of the processor based on the first computing power difference of the processor in the first frequency scaling period, or based on a computing power difference or a sum of computing power differences of the processor in more frequency scaling periods before the second frequency scaling period, so that the second frequency value of the processor in the second frequency scaling period is obtained, to improve flexibility and accuracy of frequency scaling, implement on-demand supply of the frequency value of the processor and a high response speed. This resolves problems of oversupply and undersupply of the frequency value, eliminates the need to preset a frequency increase scenario, and offers good generalizability.

In some implementations, the first computing power difference of the processor in the first frequency scaling period may implement proportional control on the frequency value. When the first computing power difference is larger, a proportional control effect is larger, and a difference between the second frequency value and the first frequency value is also larger, so that actual computing power of the processor matches the load more quickly. When the first computing power difference is smaller, a proportional control effect is smaller, and a difference between the second frequency value and the first frequency value is also smaller, to avoid over-scaling.

In some implementations, the sum of the computing power differences of the processor in the at least one historical frequency scaling period before the second frequency scaling period may implement integral control on the frequency value. When the sum of the computing power differences is larger, an integral control effect is larger, to reduce a static error. When the sum of the computing power differences is smaller, an integral control effect is smaller, to avoid integral saturation.

In some implementations, a difference between the first computing power difference of the processor in the first frequency scaling period and the second computing power difference of the processor in the third frequency scaling period may reflect a change rate of the computing power difference. The third frequency scaling period may be before the first frequency scaling period. When the change rate is higher, a derivative control effect is higher, and a difference between the first frequency value and the second frequency value is also larger, so that the actual computing power of the processor matches the load more quickly. When the change rate is lower, the derivative control effect is lower, and the difference between the first frequency value and the second frequency value is also lower, to avoid over-scaling.

In addition, for a manner in which the electronic device determines the second frequency value in the second frequency scaling period based on the closed-loop feedback loop algorithm and the first computing power difference, refer to detailed descriptions in the following embodiments.

S308: The electronic device determines whether to perform frequency scaling.

In some implementations, if the electronic device determines, in S304, not to update the frequency value of the processor in the second frequency scaling period, the electronic device may not adjust the frequency value of the processor in the second frequency scaling period.

In some implementations, if the electronic device determines, in S305 to S307, the second frequency value of the processor in the second frequency scaling period, the electronic device may adjust the frequency value of the processor based on the second frequency value in the second frequency scaling period. In some implementations, the electronic device may set the frequency value of the processor to the second frequency value in the second frequency scaling period.

In some implementations, the second frequency value may be used as a frequency reference value, and the electronic device may determine, based on a preset decision manner, whether to set the frequency value of the processor to the second frequency value in the second frequency scaling period. For example, the electronic device includes a plurality of processors, and determines frequency values of the plurality of processors in the second frequency scaling period in a manner the same as or similar to S301 to S307. The electronic device may obtain a maximum frequency value from the plurality of frequency values, and set the frequency values of the plurality of processors to the maximum frequency value in the second frequency scaling period.

In some implementations, the third frequency scaling period may be a frequency scaling period before the first frequency scaling period, the second frequency scaling period may be a frequency scaling period after the first frequency scaling period, and both a time interval between the third frequency scaling period and the first frequency scaling period and a time interval between the first frequency scaling period and the second frequency scaling period are less than five times of the frequency scaling period. For example, the frequency scaling period is 4 ms, and both the time interval between the third frequency scaling period and the first frequency scaling period and the time interval between the first frequency scaling period and the second frequency scaling period are less than 20 ms.

In this embodiment of this application, the second frequency value of the processor in the second frequency scaling period may be determined according to the closed-loop feedback loop algorithm and based on the first computing power difference and the first frequency value of the processor in the first frequency scaling period, to improve flexibility and accuracy of frequency scaling, implement on-demand supply of the frequency value of the processor and a high response speed. This resolves problems of oversupply and undersupply of the frequency value, eliminates the need to preset a frequency increase scenario, and offers good generalizability. In addition, a quantity of clock cycles of the processor may be obtained from the register, and the first computing power difference of the processor may be determined based on the quantity of clock cycles, to improve accuracy of determining the load of the processor, and further improve accuracy of performing frequency scaling on the processor.

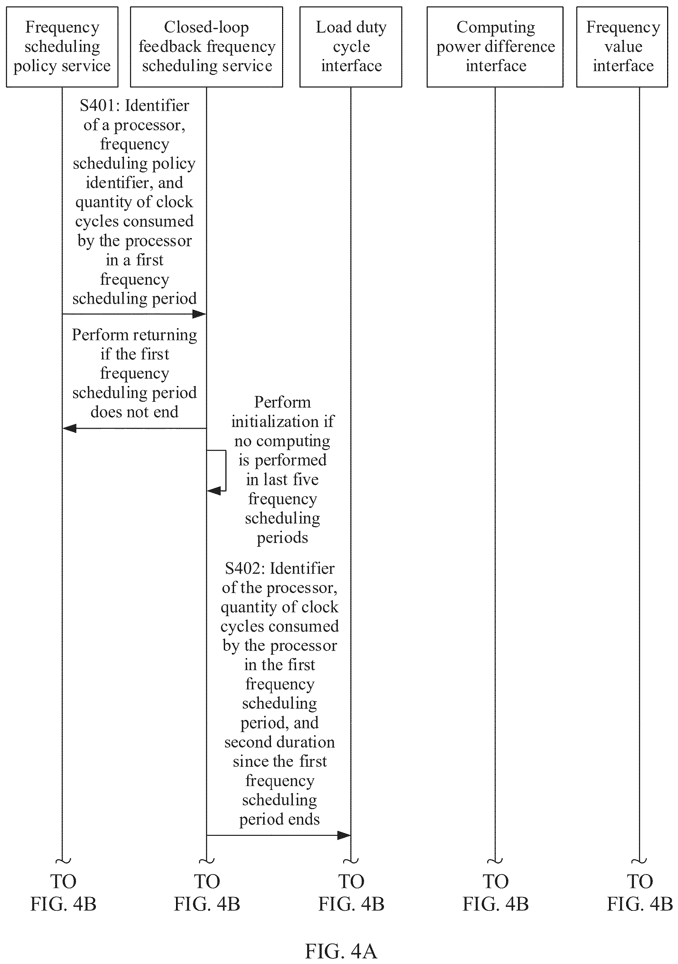

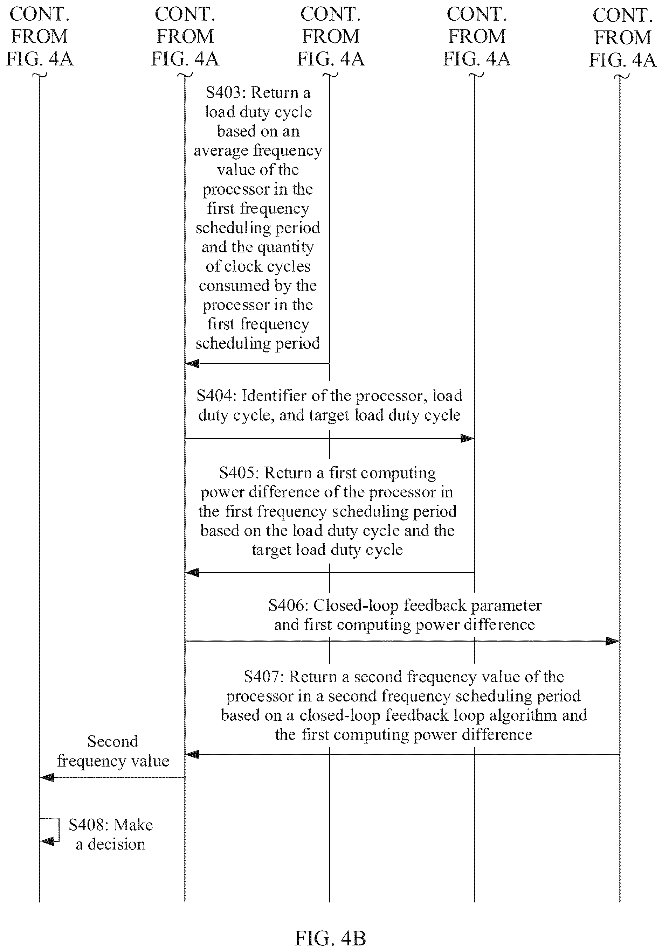

FIG. 4A and FIG. 4B are a flowchart of a frequency scaling method for an electronic device according to an embodiment of this application. As shown in FIG. 4A and FIG. 4B, the electronic device may include a frequency scaling policy service and a closed-loop feedback frequency scaling service. The frequency scaling method may be implemented through interaction between the two services.

The frequency scaling policy service may be an upper-layer entry that provides a frequency scaling service for the electronic device. The frequency scaling policy service may obtain pieces of data (for example, an identifier of a processor and a quantity of clock cycles of the processor) related to the processor, and provide the pieces of data for one or more frequency scaling services, to obtain a frequency value corresponding to the processor from the one or more frequency scaling services.

The closed-loop feedback frequency scaling service may be one of the one or more frequency scaling services. The closed-loop feedback frequency scaling service may obtain pieces of data related to the processor from the frequency scaling policy service, determine, according to a closed-loop feedback loop algorithm and the pieces of data, a frequency value corresponding to the processor, and return the frequency value to the frequency scaling policy service. In some implementations, the closed-loop feedback frequency scaling service may include a plurality of computing interfaces, and each computing interface may be configured to implement one type of computing. For example, the closed-loop feedback frequency scaling service may include a load duty cycle interface, a computing power difference interface, and a frequency value interface. The load duty cycle interface may be configured to calculate a load duty cycle of the processor, the computing power difference interface may be configured to calculate a computing power difference of the processor, and the frequency value interface may be configured to calculate, according to the closed-loop feedback loop algorithm, the frequency value corresponding to the processor.

The following specifically describes a manner of implementing the frequency scaling method for the processor through the frequency scaling policy service and the closed-loop feedback frequency scaling service. In addition, it may be understood that, in actual application, an implementation of the method is not limited to the manner shown in FIG. 4A and FIG. 4B. It should be further noted that the method is not limited to a specific sequence described in FIG. 4A and FIG. 4B and below. It should be understood that in another embodiment, a sequence of some steps in the method may be exchanged based on an actual requirement, or some steps in the method may be omitted or deleted. The method includes the following steps.

S401: A frequency scaling policy service invokes a closed-loop feedback frequency scaling service to transfer an identifier (cpu_id) of a processor, a frequency scaling policy identifier (flags), and a quantity of clock cycles (clock_cycles) consumed by the processor in a first frequency scaling cycle.

In some examples, the identifier of the processor and the frequency scaling policy identifier may be omitted.

The identifier of the processor indicates an identity of the processor. When the electronic device includes a plurality of processors, different processors may be distinguished through identifiers of the processors. The identifier of the processor may include a character or a character string. In some implementations, the identifier of the processor may be set by a manufacturer of the processor, or certainly may be configured by a user or another related skilled person.

The frequency scaling policy identifier may indicate a frequency scaling policy. When the electronic device includes a plurality of frequency scaling policies, different frequency scaling policies may be distinguished through frequency scaling policy identifiers. The frequency scaling policy identifier may include a character or a character string. For example, in addition to the closed-loop feedback frequency scaling service, the electronic device further includes two other frequency scaling services. The three frequency scaling services separately correspond to one frequency scaling policy. In this case, flags=1, flags=2, and flags=3 may respectively indicate the three frequency scaling services. If flags=1 indicates the closed-loop feedback frequency scaling service, the frequency scaling policy service may invoke the closed-loop feedback frequency scaling service by setting flags to 1.

It should be noted that for how the frequency scaling policy service obtains the quantity of clock cycles consumed by the processor in the first frequency scaling period, reference may be made to the related descriptions in S301 to S303.

S402: Start the closed-loop feedback frequency scaling service to transfer, to a load duty cycle interface, the identifier of the processor (cpu_id), the quantity of clock cycles (clock_cycles) consumed by the processor in the first frequency scaling period, and second duration since the first frequency scaling period ends.

In some examples, the identifier of the processor and the second duration since the first frequency scaling period ends may be omitted.

In some implementations, when the second duration since the first frequency scaling period ends is less than preset first duration, a subsequent step may be continued. When the second duration since the first frequency scaling period ends is greater than or equal to the preset first duration, it indicates that the duration from the first frequency scaling period to a current moment is long, and load, a service scenario, and the like of the electronic device may have changed greatly. Therefore, it is difficult to accurately determine a frequency value of the processor in a frequency scaling period after the current moment based on data, for example, a quantity of clock cycles and a computing power in a historical frequency scaling period including the first frequency scaling period. Therefore, the subsequent step may be stopped.

In some implementations, when the second duration since the first frequency scaling period ends is greater than or equal to the preset first duration, at least some related data used to determine the frequency value of the processor may be initialized. In some implementations, if a second frequency value of the processor in a second frequency scaling period is not determined based on at least one of the closed-loop feedback loop algorithm, a first computing power difference, a first frequency value, and a sum of a second computing power difference and a computing power difference of the processor in at least one historical frequency scaling period within the first duration from a moment at which the first frequency scaling period ends, the first computing power difference, the first frequency value, and the sum of the second computing power difference and the computing power difference of the processor in the at least one historical frequency scaling period are deleted. The at least one historical frequency scaling period may include the first frequency scaling period and a third frequency scaling period, the second computing power difference is a computing power difference of the processor in the third frequency scaling period, and the third frequency scaling period is before the first frequency scaling period.

In some implementations, the first duration may be an integer multiple of the frequency scaling period. For example, the frequency scaling period is 4 ms, and the first duration may be five times the frequency scaling period, that is, 20 ms. In addition, it may be understood that in actual application, the first duration may alternatively be another value.

In some implementations, the closed-loop feedback frequency scaling service may also transfer the current moment and the frequency scaling period to the load duty cycle interface. The load duty cycle interface determines, based on the current moment and the frequency scaling period, the second duration since the first frequency scaling period ends.

S403: The load duty cycle interface returns a load duty cycle (cpu_usage) to the closed-loop feedback frequency scaling service based on an average frequency value (avg_freq) of the processor in the first frequency scaling period and the quantity of clock cycles (clock_cycles) consumed by the processor in the first frequency scaling period.

In some examples, the load duty cycle interface may determine the load duty cycle of the processor in the first frequency scaling period based on the quantity of clock cycles consumed by the processor in the first frequency scaling period. It should be noted that, for a manner in which the load duty cycle interface determines the load duty cycle of the processor in the first frequency scaling period based on the quantity of clock cycles consumed by the processor in the first frequency scaling period, reference may be made to the detailed descriptions in S305.

S404: The closed-loop feedback frequency scaling service transfers the identifier of the processor (cpu_id), the load duty cycle (cpu_usage), and the target load duty cycle (target_load) to the computing power difference interface.

In some examples, the identifier of the processor may be omitted.

S405: The computing power difference interface returns the first computing power difference (error) of the processor in the first frequency scaling period to the closed-loop feedback frequency scaling service based on the load duty cycle (cpu_usage) and the target load duty cycle (target_load).

In some examples, the computing power difference interface may determine the first computing power difference of the processor in the first frequency scaling period based on the target load duty cycle and the load duty cycle. It should be noted that, for a manner in which the computing power difference interface determines the first computing power difference of the processor in the first frequency scaling period based on the target load duty cycle and the load duty cycle, reference may be made to the detailed description in S306.

S406: The closed-loop feedback frequency scaling service transfers a closed-loop feedback parameter and the first computing power difference (error) to a frequency value interface.

In some examples, the closed-loop feedback parameter may be omitted.

It can be learned from the foregoing that the closed-loop feedback loop algorithm may include three parts: proportional control (p), integral control (i), and derivative control (d). Therefore, the closed-loop feedback parameter may include at least one of a proportional adjustment coefficient (kp), an integral adjustment coefficient (ki), and a derivative adjustment coefficient (kd). The proportional adjustment coefficient can accelerate a response speed of a system, improve adjustment precision of the system, and quickly adjust an error. The integral adjustment coefficient can eliminate a residual and adjust a steady state time. The derivative adjustment coefficient can improve dynamic performance of the system, predict an error trend, and correct an error in advance.

It should be noted that the proportional adjustment coefficient, the integral adjustment coefficient, and the derivative adjustment coefficient may be preset values. It may be understood that the proportional adjustment coefficient, the integral adjustment coefficient, and the derivative adjustment coefficient may be configured and updated by the user. A manner of setting the proportional adjustment coefficient, the integral adjustment coefficient, and the derivative adjustment coefficient, and specific values of the proportional adjustment coefficient, the integral adjustment coefficient, and the derivative adjustment coefficient are not limited in embodiments of this application.

S407: The frequency value interface returns the second frequency value (pid_freq) of the processor in the second frequency scaling period to the closed-loop feedback frequency scaling service based on the closed-loop feedback loop algorithm and the first computing power difference (error).

The frequency value interface may determine the second frequency value of the processor in the second frequency scaling period based on the closed-loop feedback loop algorithm and the first computing power difference.

In some implementations, the second frequency value of the processor in the second frequency scaling period may be determined according to the following formula 3:

$$\text{pid\_freq} = \text{last\_pid\_freq} + \text{p\_freq} + \text{i\_freq} + \text{d\_freq} \quad (\text{formula 3})$$

In some examples, pid_freq represents the second frequency value of the processor in the second frequency scaling period; last_pid_freq represents the first frequency value of the processor in the first frequency scaling period; p_freq represents a computing component of proportional control, and p_freq=kp*error; i_freq represents a computing component of integral control, i_freq=ki*error_sum, and error_sum represents a sum of computing power differences of the processor in the at least one historical frequency scaling period; d_freq represents a computing component of derivative control, d_freq=kd*(error-last_error), and last_error represents a second computing power difference of the processor in the third frequency scaling period; and at least one of i_freq and d_freq may be omitted.

It can be learned from the formula 3 that, in the closed-loop feedback loop algorithm, the proportional control may be performed on the frequency value of the processor based on the first computing power difference of the processor in the first frequency scaling period, the integral control may be performed on a frequency of the processor based on the sum of the computing power differences of the processor in the at least one historical frequency scaling period, and derivative control may be performed on the frequency value of the processor based on a difference between the first computing power difference of the processor in the first frequency scaling period and the second computing power difference of the processor in the third frequency scaling period. With reference to characteristics such as a fast response and anti-oscillation of the closed-loop feedback loop algorithm, an actual computing power provided by the processor in the second frequency scaling period better matches a computing power required by the load.

In some implementations, if the sum of the computing power differences of the processor in the at least one historical frequency scaling period is greater than or equal to a preset value range, the sum of the computing power differences may be scaled to the value range, to resolve problems of integral saturation and inaccurate frequency scaling that are caused by the excessively large sum of the computing power differences. For example, the value range may be 1 to 1024. Certainly, in actual application, the value range may alternatively be a range of another size.

S408: The frequency scaling policy service obtains the second frequency value (pid_freq) from the closed-loop feedback frequency scaling service, and makes a decision.

When obtaining the second frequency value, the frequency scaling policy service may make a decision based on the second frequency value, to determine whether to use the second frequency value as a final frequency value of the processor in the second frequency scaling period.

In some implementations, the frequency scaling policy service may determine the second frequency value as the final frequency value of the processor in the second frequency scaling period.

In some implementations, the second frequency value may be used as a frequency reference value. The frequency scaling policy service may further determine more frequency reference values of the processor in the second frequency scaling period according to another frequency scaling policy, and select a largest frequency reference value from the plurality of frequency reference values as the final frequency value of the processor in the second frequency

scaling period.

In this embodiment of this application, a frequency scaling algorithm of the processor may be implemented through a plurality of services and computing interfaces. The closed-loop feedback frequency scaling service may initialize historical data when the historical data, for example, the first computing power difference of the processor in the first frequency scaling period is accumulated for a long time, and no longer determine the second frequency value of the processor in the subsequent second frequency scaling period based on the historical data. This improves accuracy of determining the second frequency value of the processor in the second frequency scaling period. The load duty cycle interface may determine the load duty cycle of the processor in the first frequency scaling period based on the quantity of clock cycles of the processor in the first frequency scaling period. The computing power interface may accurately determine the first computing power difference of the processor in the first frequency scaling period based on the load duty cycle. Because the quantity of clock cycles is obtained from a register of the processor, the load duty cycle can more accurately reflect load of the processor, and the first computing power difference can more accurately reflect a difference between an actual computing power provided by the processor in the first frequency scaling period and a computing power required by the load. The frequency value interface may determine the second frequency value in the second frequency scaling period with reference to characteristics such as a fast response and anti-oscillation of the closed-loop feedback loop algorithm, so that an actual computing power provided by the processor in the second frequency scaling period better matches the computing power required by the load, and on-demand supply of the computing power of the processor is implemented.

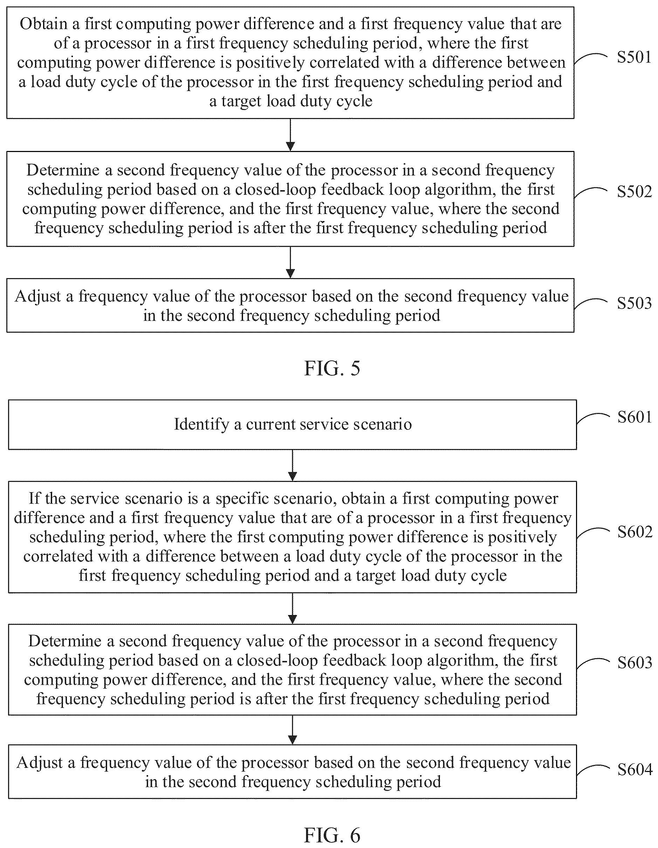

FIG. 5 is a flowchart of a frequency scaling method for an electronic device according to an embodiment of this application. The method may be used by the electronic device to perform frequency scaling on a processor in a single frequency scaling period. It should be noted that the method is not limited to a specific sequence described in FIG. 5 and below. It should be understood that in another embodiment, a sequence of some steps in the method may be exchanged based on an actual requirement, or some steps in the method may be omitted or deleted. The method includes the following steps.

S501: An electronic device obtains a first computing power difference and a first frequency value that are of a processor in a first frequency scaling period, where the first computing power difference is positively correlated with a difference between a load duty cycle of the processor in the first frequency scaling period and a target load duty cycle.

In some examples, for a manner in which the electronic device obtains the first computing power difference and the first frequency value of the processor in the first frequency scaling period, refer to related descriptions in S301 to S306.

S502: The electronic device determines a second frequency value of the processor in a second frequency scaling period based on the first computing power difference and the first frequency value, where the second frequency scaling period is after the first frequency scaling period.

In some examples, for a manner in which the electronic device determines the second frequency value of the processor in the second frequency scaling period based on the first computing power difference and the first frequency value, refer to the related description in S307, or refer to the related descriptions in S401 to S408.

S503: The electronic device adjusts a frequency value of the processor based on the second frequency value in the second frequency scaling period.

In some examples, for a manner in which the electronic device adjusts the frequency value of the processor based on the second frequency value in the second frequency scaling period, refer to the related descriptions in S308 and S408.

In this embodiment of this application, the first computing power difference and the first frequency value of the processor in the first frequency scaling period may be obtained. Because the first computing power difference is positively correlated with the difference between the load duty cycle of the processor in the first frequency scaling period and the target load duty cycle, and the load duty cycle may be used as a load measurement value of the processor in the first frequency scaling period, the first computing power difference may indicate a difference between an actual computing power provided by the processor in the first frequency scaling period and a target computing power. The second frequency value of the processor in the second frequency scaling period is determined based on the first computing power difference and the first frequency value of the processor in the first frequency scaling period, and the frequency value of the processor is adjusted based on the second frequency value in the second frequency scaling period, to improve flexibility and accuracy of frequency scaling, implement on-demand supply of the frequency value of the processor and a high response speed. This resolves problems of oversupply and undersupply of the frequency value, eliminates the need to preset a frequency increase scenario, and offers good generalizability.

FIG. 6 is a flowchart of a frequency scaling method for an electronic device according to an embodiment of this application. The method may be used by the electronic device to perform frequency scaling on a processor in a single frequency scaling period. It should be noted that the method is not limited to a specific sequence described in FIG. 6 and below. It should be understood that in another embodiment, a sequence of some steps in the method may be exchanged based on an actual requirement, or some steps in the method may be omitted or deleted. The method includes the following steps.

S601: An electronic device identifies a current service scenario.

The electronic device may determine the service scenario based on a current running status. For example, the electronic device may detect startup, running, and ending of an application; and detect an input operation of a user from an input device, for example, a keyboard or a touchscreen, may further identify a type of the input operation (for example, a tap operation or a touch operation), and detect an operation object of the input operation (for example, starting an application, pulling down a status bar, or switching a display interface) with reference to the input operation and a display interface on a display.

It should be noted that a manner in which the electronic device identifies the service scenario is not limited in this embodiment of this application.

S602: The electronic device obtains a first computing power difference and a first frequency value that are of a processor in a first frequency scaling period in response to that the service scenario is a specific scenario, where the first computing power difference is positively correlated with a difference between a load duty cycle of the processor in the first frequency scaling period and a target load duty cycle.

In some implementations, the electronic device may obtain the specific scenario configured by a user. In some implementations, the specific scenario includes one or more of starting an application, opening a status bar, switching a display interface, responding to an input operation, displaying an animation effect, and displaying a virtual keyboard. It may be understood that the specific scenario may further include more service scenarios.

Starting an application may include cold starting an application or hot starting an application. When an application is started, there is no process of the application in the background of the electronic device. In this case, the electronic device re-creates a new process and allocates the new process to the application. When an application is hot started, there is a process of the application in the background. Therefore, when there is the existing process, the application may be started from the existing process.

The status bar may be used to display a running status of the electronic device, for example, a network mode, a message prompt mode, brightness, and a volume. A user may open the status bar to query or configure the running status of the electronic device.

Switching a display interface may include switching between any plurality of display interfaces of the electronic device. In some implementations, switching a display interface may include switching between display interfaces in an application, or may include switching between display interfaces of applications.

An input operation may be used by the user or another external object to input data to the electronic device. In some implementations, the input operation may include a tap operation or a touch operation on the display.

Displaying an animation effect may be used to provide more realistic and lively visual experience for the user. In some implementations, a corresponding animation effect may be displayed in response to the user operation, for example, a dynamic switching effect during display interface switching.

The virtual keyboard may be used to receive data, for example, a text entered by the user.

In some implementations, if the service scenario is a specific scenario, the electronic device may not perform the step.

In some examples, for a manner in which the electronic device obtains the first computing power difference and the first frequency value of the processor in the first frequency scaling period, refer to related descriptions in S301 to S306.

S603: The electronic device determines a second frequency value of the processor in a second frequency scaling period based on the first computing power difference and the first frequency value, where the second frequency scaling period is after the first frequency scaling period.

In some examples, for a manner in which the electronic device determines the second frequency value of the processor in the second frequency scaling period based on the first computing power difference and the first frequency value, refer to the related description in S307, or refer to the related descriptions in S401 to S408.

S604: The electronic device adjusts a frequency value of the processor based on the second frequency value in the second frequency scaling period.

In some examples, for a manner in which the electronic device adjusts the frequency value of the processor based on the second frequency value in the second frequency scaling period, refer to the related descriptions in S308 and S408.

In this embodiment of this application, when the service scenario of the electronic device is identified and the electronic device is in the specific scenario, on-demand supply of the frequency value of the processor and a high response speed can be implemented, and problems of oversupply and undersupply of the frequency value are resolved.

The following describes beneficial effects of the frequency scaling method provided in this application with reference to specific examples.

For example, a computing power and a power consumption level of the electronic device are shown in the following Table 1.

Table 1

| Frequency value | Computing power | Power consumption | Energy efficiency value (a larger value indicates better performance) |
|---|---|---|---|
| 1172000 | 1397 | 148 | 0.11908 |
| 1517000 | 1809 | 226 | 0.14006 |
| 1882000 | 2224 | 340 | 0.16807 |

As shown in Table 1, when the frequency value of the processor is 1172000, the computing power of the processor is 1397, the power consumption is 148, and the energy efficiency value is 0.11908. When the frequency value of the processor is 1882000, the computing power of the processor is 2224, the power consumption is 340, and the energy efficiency value is 0.16807.

If the processor runs for 5 ms each at 1172000 and 1882000, the computing power implemented by the processor is 1397*5+2224*5=18105, and the consumed power consumption is 148*5+340*5=2440. If the processor runs for 10 ms at 1517000, the computing power of the processor is 1809*10=18090, and the power consumption of the processor is 226*10=2260. It can be learned that, compared with those when the processor runs for 5 ms at 1172000 and 1882000, respectively, the computing power is similar but the power consumption is reduced by 7.4% when the processor runs for 10 ms at 1517000.

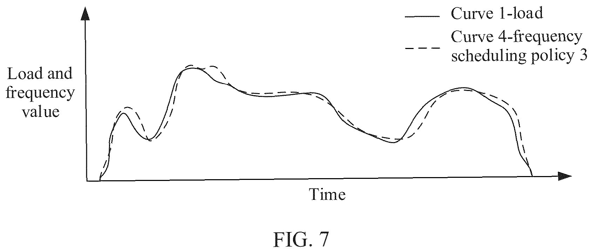

FIG. 7 is a diagram of a load following curve of a processor according to an embodiment of this application. In FIG. 7, a curve 4 is a frequency value curve corresponding to a frequency scaling policy 3 (namely, the frequency scaling method for the processor provided in this application). Compared with the curve 2 and the curve 3 in FIG. 2, the curve 4 has a higher degree of overlapping with the curve 1. In other words, the frequency scaling method for the processor provided in this application has high frequency scaling flexibility and accuracy, implements on-demand supply of a frequency value of the processor and a high response speed, and resolves problems of oversupply and undersupply of the frequency value. For example, compared with an undersupply region in FIG. 2, the curve 4 can increase the frequency value of the processor to provide a higher computing power, so that the processor has higher performance. Compared with that in an oversupply region in FIG. 2, the curve 4 can decrease the frequency value of the processor to provide a lower computing power, so that power consumption waste is reduced.

Based on a same inventive concept, as an implementation of the foregoing method, an embodiment of this application provides a frequency scaling apparatus for an electronic device. The apparatus embodiment corresponds to the foregoing method embodiment. For ease of reading, details in the foregoing method embodiment are not described in the apparatus embodiment. However, it should be clear that the apparatus in this embodiment can correspondingly implement all content of the foregoing method embodiment.

In a possible implementation, the apparatus may correspond to the processor in the foregoing method embodiment, for example, may be a processor chip or a processor core in a processor chip. The apparatus may have a function of performing each step or procedure corresponding to the frequency scaling method for the electronic device in the foregoing method. The function may be implemented by hardware, or may be implemented by hardware executing corresponding software.

Based on a same inventive concept, an embodiment of this application further provides an electronic device. The electronic device includes a memory and a processor. The memory is configured to store a computer program. The processor is configured to perform the method in the foregoing method embodiments when invoking the computer program.

The electronic device provided in this embodiment may perform the foregoing method embodiments. An implementation principle and a technical effect thereof are similar to those of the foregoing method embodiments. Details are not described herein again.

Based on a same inventive concept, an embodiment of this application further provides a chip system. The chip system includes a processor. The processor is coupled to a memory. The processor executes a computer program stored in the memory, to implement the method in the foregoing method embodiments.

In some examples, the chip system may be a single chip or a chip module including a plurality of chips.

An embodiment of this application further provides a computer-readable storage medium. The computer-readable storage medium stores a computer program. When the computer program is executed by a processor, the method in the foregoing method embodiments is implemented.

An embodiment of this application further provides a computer program product. When the computer program product runs on an electronic device, the electronic device is enabled to implement the method in the foregoing method embodiments.

When the foregoing integrated unit is implemented in the form of a software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the foregoing method embodiments may be implemented. The computer program includes computer program code. The computer program code may be in a source code form, an object code form, an executable file, some intermediate forms, or the like. The computer-readable storage medium may include at least: any entity or apparatus that can carry computer program code to an electronic device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk, a magnetic disk, or an optical disc.

In the foregoing embodiments, descriptions of each embodiment have respective focuses. For a part that is not described in detail or recorded in an embodiment, refer to related descriptions in another embodiment.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In embodiments provided in this application, it should be understood that the disclosed apparatus/ device and method may be implemented in other manners. For example, the described apparatus/device embodiment is merely an example. For example, the division of the modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

It should be understood that the term "include"/"comprise" when used in the specification of this application and the appended claims indicates the presence of the described features, wholes, steps, operations, elements, and/or components, but does not preclude the presence or addition of one or more other features, wholes, steps, operations, elements, components, and/or collections thereof.

It should also be understood that the term "and/or" as used in the specification of this application and the appended claims refers to any combination of one or more of associated items and all possible combinations, and includes such combinations.

As used in the specification of this application and the appended claims, the term "if" may be interpreted as "when" or "once" or "in response to determining" or "in response to detecting" depending on the context. Similarly, the phrase "if it is determined" or "if[the condition or event] is detected" may be interpreted as "once it is determined", "in response to determining", "once [the condition or event] is detected", or "in response to detecting [the condition or event]" depending on the context.

In addition, in the descriptions in the specification and the appended claims of this application, the terms "first", "second", "third", and the like are merely intended for differentiated description, but cannot be understood as an indication or an implication of relative importance.

Reference to "one embodiment" or "some embodiments" described in the specification of this application means that one or more embodiments of this application include a specific feature, structure, or characteristic described with reference to the embodiment. Therefore, the statements "in an embodiment", "in some embodiments", "in some other embodiments", "in other embodiments", and the like that appear in different places in this specification do not necessarily mean referring to a same embodiment. Instead, the statements mean "one or more but not all of embodiments", unless otherwise specifically emphasized in another manner. The terms "include", "contain", "have", and variants of the terms all mean "include but are not limited to", unless otherwise specifically emphasized in another manner.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

**Claims**

1. A frequency scaling method for an electronic device, comprising:

   obtaining a first computing power difference and a first frequency value that are of a processor in a first frequency scaling period, wherein the first computing power difference is positively correlated with a difference between a load duty cycle of the processor in the first frequency scaling period and a target load duty cycle;

determining a second frequency value of the processor in a second frequency scaling period based on the first computing power difference and the first frequency value, wherein the second frequency scaling period is after the first frequency scaling period; and

adjusting a frequency value of the processor based on the second frequency value in the second frequency scaling period.

2. The method according to claim 1, wherein obtaining the first computing power difference of the processor in the first frequency scaling period comprises:

obtaining a quantity of clock cycles consumed by the processor to execute an instruction in the first frequency scaling period;

determining the load duty cycle of the processor in the first frequency scaling period based on the quantity of clock cycles; and

determining the first computing power difference based on the load duty cycle and the target load duty cycle.

3. The method according to claim 2, wherein obtaining the quantity of clock cycles consumed by the processor to execute the instruction in the first frequency scaling period comprises:

obtaining, via a performance monitor unit PMU or a register, the quantity of clock cycles consumed by the processor to execute the instruction in the first frequency scaling period.

4. The method according to any one of claims 1 to 3, wherein determining the second frequency value of the processor in the second frequency scaling period based on the first computing power difference and the first frequency value comprises:

determining the second frequency value of the processor in the second frequency scaling period based on at least one of the first computing power difference, the first frequency value, and a sum of a second computing power difference and a computing power difference of the processor in at least one historical frequency scaling period, wherein the second computing power difference is a computing power difference of the processor in a third frequency scaling period, and the third frequency scaling period is before the first frequency scaling period.

5. The method according to claim 4, wherein the method further comprises:

if the second frequency value of the processor in the second frequency scaling period is not determined based on at least one of the first computing power difference, the first frequency value, and the sum of the second computing power difference and the computing power difference of the processor in the at least one historical frequency scaling period within first duration from a moment at which the first frequency scaling period ends, deleting the first computing power difference, the first frequency value, and the sum of the second computing power difference and the computing power difference of the processor in the at least one historical frequency scaling period.

6. The method according to claim 5, wherein the first duration is an integer multiple of a frequency scaling period.

7. The method according to any one of claims 1 to 6, wherein determining the second frequency value of the processor in the second frequency scaling period based on the first computing power difference and the first frequency value comprises:

determining the second frequency value of the processor in the second frequency scaling period based on a closed-loop feedback loop algorithm, the first computing power difference, and the first frequency value, wherein the closed-loop feedback loop algorithm comprises proportional control and at least one of integral control and derivative control.

8. The method according to any one of claims 1 to 7, wherein adjusting the frequency value of the processor based on the second frequency value in the second frequency scaling period comprises:

setting the frequency value of the processor to the second frequency value in the second frequency scaling period.

9. A frequency scaling method for an electronic device, comprising:

identifying a service scenario of the electronic device;

obtaining a first computing power difference and a first frequency value that are of a processor in a first frequency scaling period in response to the service scenario being a specific scenario, wherein the first computing power difference is positively correlated with a difference between a load duty cycle of the processor in the first frequency scaling period and a target load duty cycle;

determining a second frequency value of the processor in a second frequency scaling period based on the first computing power difference and the first frequency value, wherein the second frequency scaling period is after the first frequency scaling period; and

adjusting a frequency value of the processor based on the second frequency value in the second frequency scaling period.

10. The method according to claim 9, wherein the specific scenario comprises any one of the following: starting an application, opening a status bar, switching a display interface, responding to an input operation, displaying an animation effect, and displaying a virtual keyboard.

11. An electronic device, comprising a memory and a processor, wherein the memory is configured to store a computer program, and the processor is configured to perform the method according to any one of claims 1 to 8 or perform the method according to claim 9 or 10 when invoking the computer program.

12. A computer-readable storage medium, storing a computer program, wherein when the computer program is executed by a processor, the method according to any one of claims 1 to 8 or the method according to claim 9 or 10 is implemented.

13. A computer program product, wherein when the computer program product runs on an electronic device, the electronic device is enabled to perform the method according to any one of claims 1 to 8 or perform the method according to claim 9 or 10.

Electronic device 100

FIG. 1

FIG. 2

A register of a processor collects a quantity of clock cycles consumed by the processor — S301

No

Does a first scheduling period end — S302

Yes

Obtain and store a quantity of clock cycles consumed by the processor in the first frequency scheduling period — S303

Does a frequency value of the processor in a second frequency scheduling period update — S304

No

Yes

Determine a load duty cycle of the processor in the first frequency scheduling period based on the quantity of clock cycles consumed by the processor in the first frequency scheduling period — S305

Determine a first computing power difference of the processor in the first frequency scheduling period based on the load duty cycle of the processor in the first frequency scheduling period and a target load duty cycle — S306

Determine a second frequency value in the second frequency scheduling period based on a closed-loop feedback loop algorithm and the first computing power difference — S307

Determine whether to perform frequency scheduling — S308

FIG. 3

| Frequency scheduling policy service | Closed-loop feedback frequency scheduling service | Load duty cycle interface | Computing power difference interface | Frequency value interface |
|---|---|---|---|---|

S401: Identifier of a processor, frequency scheduling policy identifier, and quantity of clock cycles consumed by the processor in a first frequency scheduling period

Perform returning if the first frequency scheduling period does not end

Perform initialization if no computing is performed in last five frequency scheduling periods

S402: Identifier of the processor, quantity of clock cycles consumed by the processor in the first frequency scheduling period, and second duration since the first frequency scheduling period ends

TO
FIG. 4B

TO
FIG. 4B

TO
FIG. 4B

TO
FIG. 4B

TO
FIG. 4B

FIG. 4A

EP 4 692 983 A1

CONT. FROM FIG. 4A   CONT. FROM FIG. 4A   CONT. FROM FIG. 4A   CONT. FROM FIG. 4A   CONT. FROM FIG. 4A

S403: Return a load duty cycle based on an average frequency value of the processor in the first frequency scheduling period and the quantity of clock cycles consumed by the processor in the first frequency scheduling period

S404: Identifier of the processor, load duty cycle, and target load duty cycle

S405: Return a first computing power difference of the processor in the first frequency scheduling period based on the load duty cycle and the target load duty cycle

S406: Closed-loop feedback parameter and first computing power difference

S407: Return a second frequency value of the processor in a second frequency scheduling period based on a closed-loop feedback loop algorithm and the first computing power difference

Second frequency value

S408: Make a decision

FIG. 4B

24

Obtain a first computing power difference and a first frequency value that are of a processor in a first frequency scheduling period, where the first computing power difference is positively correlated with a difference between a load duty cycle of the processor in the first frequency scheduling period and a target load duty cycle ⌐ S501

Determine a second frequency value of the processor in a second frequency scheduling period based on a closed-loop feedback loop algorithm, the first computing power difference, and the first frequency value, where the second frequency scheduling period is after the first frequency scheduling period ⌐ S502

Adjust a frequency value of the processor based on the second frequency value in the second frequency scheduling period ⌐ S503

FIG. 5

Identify a current service scenario ⌐ S601

If the service scenario is a specific scenario, obtain a first computing power difference and a first frequency value that are of a processor in a first frequency scheduling period, where the first computing power difference is positively correlated with a difference between a load duty cycle of the processor in the first frequency scheduling period and a target load duty cycle ⌐ S602

Determine a second frequency value of the processor in a second frequency scheduling period based on a closed-loop feedback loop algorithm, the first computing power difference, and the first frequency value, where the second frequency scheduling period is after the first frequency scheduling period ⌐ S603

Adjust a frequency value of the processor based on the second frequency value in the second frequency scheduling period ⌐ S604

FIG. 6

FIG. 7

## INTERNATIONAL SEARCH REPORT

| International application No. |
| --- |
| **PCT/CN2024/102908** |

### A.    CLASSIFICATION OF SUBJECT MATTER

G06F 1/08(2006.01)i

According to International Patent Classification (IPC) or to both national classification and IPC

### B.    FIELDS SEARCHED

Minimum documentation searched (classification system followed by classification symbols)

IPC：G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 处理器, 频率, 周期, 占空比, 负载, 算力, 场景, CPU, frequency, load, scene

### C.    DOCUMENTS CONSIDERED TO BE RELEVANT

| Category* | Citation of document, with indication, where appropriate, of the relevant passages | Relevant to claim No. |
| --- | --- | --- |
| X | CN 116166414 A (GUANGDONG OPPO MOBILE COMMUNICATIONS CO., LTD.) 26 May 2023 (2023-05-26) <br> description, paragraphs [0027]-[0156] | 1-13 |
| A | CN 116414215 A (HONOR TERMINAL CO., LTD.) 11 July 2023 (2023-07-11) <br> entire document | 1-13 |
| A | CN 112639675 A (HUAWEI TECHNOLOGIES CO., LTD.) 09 April 2021 (2021-04-09) <br> entire document | 1-13 |
| A | WO 2022141206 A1 (HUAWEI TECHNOLOGIES CO., LTD.) 07 July 2022 (2022-07-07) <br> entire document | 1-13 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 September 2024** | **20 September 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/102908**

| Patent document cited in search report | | | Publication date (day/month/year) | Patent family member(s) | | | Publication date (day/month/year) |
|---|---|---|---|---|---|---|---|
| CN | 116166414 | A | 26 May 2023 | None | | | |
| CN | 116414215 | A | 11 July 2023 | None | | | |
| CN | 112639675 | A | 09 April 2021 | None | | | |
| WO | 2022141206 | A1 | 07 July 2022 | EP | 4254751 | A1 | 04 October 2023 |

Form PCT/ISA/210 (patent family annex) (July 2022)

**REFERENCES CITED IN THE DESCRIPTION**

**Patent documents cited in the description**

- CN 202311103322

- CN 202311168887